# EUROPEAN PATENT SPECIFICATION

(11) **EP 1 290 840 B1**
(45) Date of publication and mention of the grant of the patent: **12.10.2005**
(21) Application number: 01971460.9
(22) Date of filing: 19.04.2001
(51) Int. Cl.: H04L 12/56, H04Q 11/04

(54) **WIRELESS ATM NETWORK**
DRAHTLOSES ATM-NETZWERK
RESEAU ATM SANS FIL

(30) Priority: 20.04.2000 GB 0009889
(43) Date of publication of application: 12.03.2003
(73) Proprietor: UNIVERSITY OF SURREY, Surrey GU2 7XH (GB)
(72) Inventor: TAFAZOLLI, Rahim, Cheam Surrey SM2 6JT (GB); SFIKAS, Georgios, Keratsini GR-187 55 Pireas (GR)
(74) Representative: Bibby, William Mark
(86) International application number: PCT/GB2001/001768
(87) International publication number: WO 2001/082534

(56) References cited:
- EP-A- 0 977 456
- DURKIN J F ET AL: "AN EMERGING WIRELESS ATM ARCHITECTURE: SURVIVABLE ATM" ANNUAL MILITARY COMMUNICATIONS CONFERENCE,US,NEW YORK, NY: IEEE, 3 November 1997 (1997-11-03), pages 498-500, XP000799728 ISBN: 0-7803-4250-X

## Description

This invention relates to a method of transmitting data over a wireless link and to an Asynchronous Transfer Mode (ATM) protocol stack for wireless ATM communications. EP-A-0977456 describes a known ATM protocol stack for wireless ATM communications. Another known method to transmit data over a wireless link is given by "An energing wireless ATM architecture:SURVIVABLE ATM", ANNUAL MILITARY COMMUNICATIONS CONFERENCE, US, NEW YORK, NY: IEEE 3 Nov. 1997 pages 438-500.

In accordance with a first aspect of the invention there is provided a method of transmitting non-real-time data over a wireless link from a terminal to an ATM switch comprising the steps of
generating in the terminal, a plurality of ATM cells derived from a protocol data unit,
sequentially transmitting the ATM cells over the wireless link, and determining in the ATM switch for each transmitted cell, whether that cell contains an error, characterised by
marking the last ATM cell of the protocol data unit, and
sending an error message back to the terminal if an ATM cell is determined to contain an error, the terminal being arranged on receipt of the error message, to cease transmitting any remaining ATM cells of the protocol data unit from which the erroneous ATM cell was derived.

In accordance with a second aspect of the invention, there is provided an ATM protocol stack for wireless ATM communications comprising an ATM layer and a physical layer, below the ATM layer, adapted to include a radio access layer, wherein the ATM layer is arranged to generate a plurality of ATM cells from a protocol data unit, and
the radio access layer includes a medium access control protocol layer for sequentially transmitting said ATM cells over a wireless link and a partial packet discard mechanism characterised in that the ATM layer is arranged to mark the last cell of the protocol data unit and said partial packet discard mechanism causes the sequential transmission of any remaining ATM cells of the protocol data unit to cease in response to receipt of an error message that a transmitted ATM cell derived from said protocol data unit contains an error.

Embodiments of ATM protocol stacks in accordance with the invention will now be described by way of example with reference to the drawings in which:
Figure 1 is a schematic block diagram showing control and data flow for a wireless ATM connection in accordance with the invention;
Figure 2A is a schematic block diagram of the ATM protocol stacks of a first embodiment of the invention;
Figure 2B is a schematic block diagram of the ATM protocol stacks of a second embodiment of the invention; and
Figure 2C is a schematic block diagram of the ATM protocol stacks of a third embodiment of the invention.

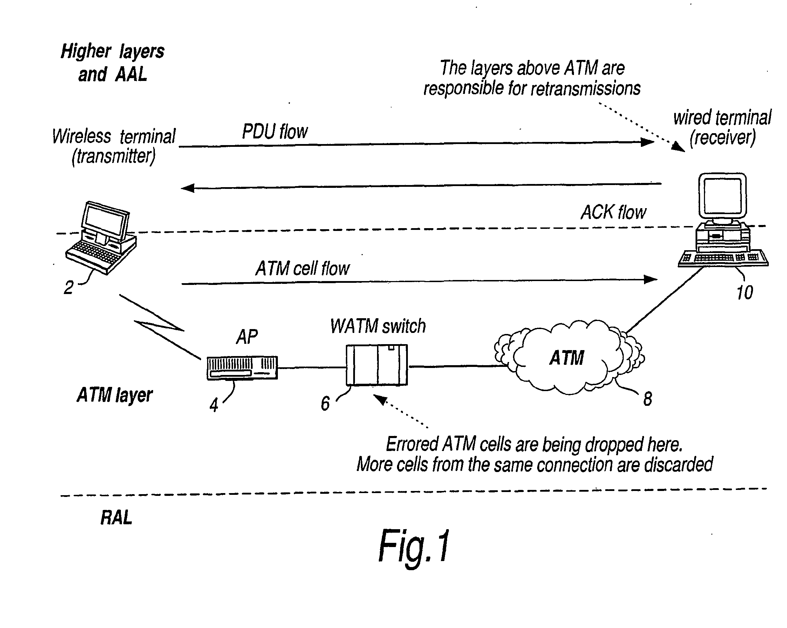

With reference to Figure 1, at a physical level, a wireless terminal such as a laptop computer 2, transmits data to an access point 4 on the network such as a base station (AP). This forms the wireless part of the connection. The AP 4 is connected to a "wireless" ATM switch 6 which is shown connected to a schematic network "cloud" 8 which may contain one or more additional ATM switches.

Having passed through the network 8, data passes to a fixed wired terminal 10 such as a desktop computer.

At a high level (higher than the illustrated ATM layer), the ATM protocol stack generates units of data called a "Protocol Data Unit" (PDU). The data contained in the PDU is transmitted from the terminal 2 to the receiver 10 as a plurality of ATM cells. The creation of PDUs is not discussed in detail here.

To transmit the PDUs across an ATM link, the PDUs are mapped to the ATM cells using so-called Adaptation Layer protocols (AAL). Presently, four AALs have been defined (by the ITU-T and the ATM forum) and the present invention is concerned with a wireless implementation of two of these protocols (AAL5 and AAL3/4). These protocols are concerned largely with the transmission of data which is not delay-sensitive (as opposed to voice and constant bit rate services).

In the transmission of AAL5 and AAL3/4 - PDUs, a scheme of "Partial Packet Discard" (PPD) has been proposed for a fixed (wired) arrangement, in which an ATM switch discards all cells associated with a particular PDU once an error has been detected in an ATM cell forming part of that PDU. This is used as a basis for the scheme used in the present invention.

It is assumed in the implementation of a PPD scheme that the high level protocols at the receiver 10 are responsible for issuing acknowledgements and requesting retransmission of PDUs by the terminal 2.

The idea of a PPD mechanism is enhanced in the present invention by reducing traffic on the wireless link between the terminal 2 and the AP 4. To achieve this, when an erroneous ATM cell is detected at the switch 6, a signal is sent back from the switch 6 to the terminal 2 requesting it to cease transmission of any further cells associated with the PDU containing the erroneous ATM cell. In this way, the throughput of the wireless link is greatly improved. It will be noted that the prior art arrangement allows the terminal 2 to continue transmitting the cells associated with the PDU containing the erroneous ATM cells. Thus a large amount of data may be sent by the terminal which is of no use and which is simply discarded by the ATM switch 6. The present invention avoids wasting bandwidth in the wireless link in this way.

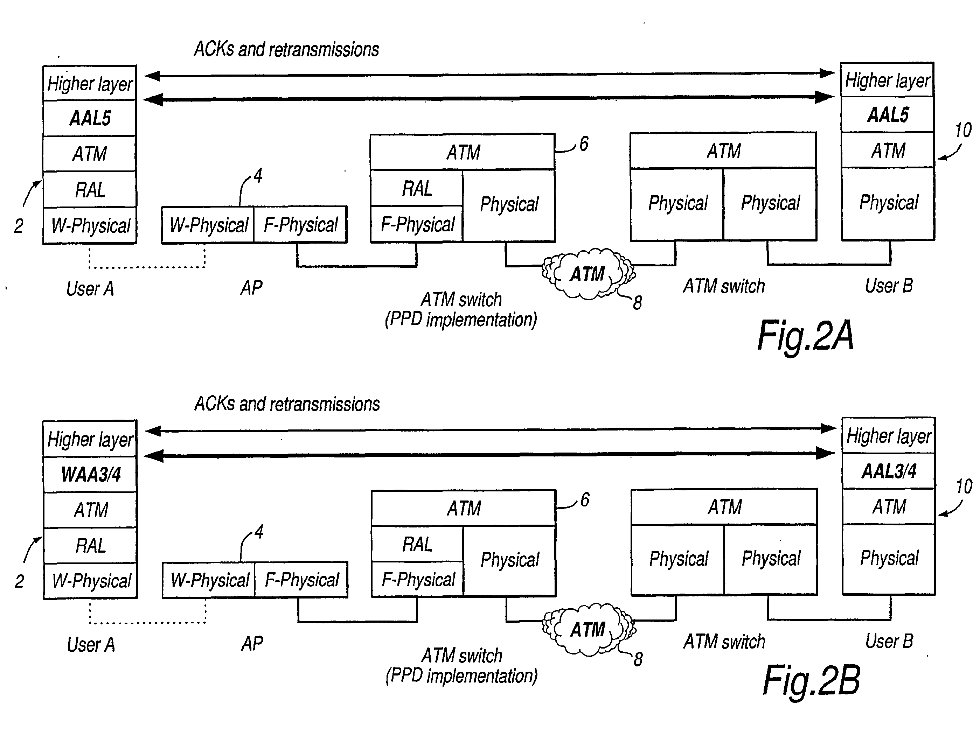

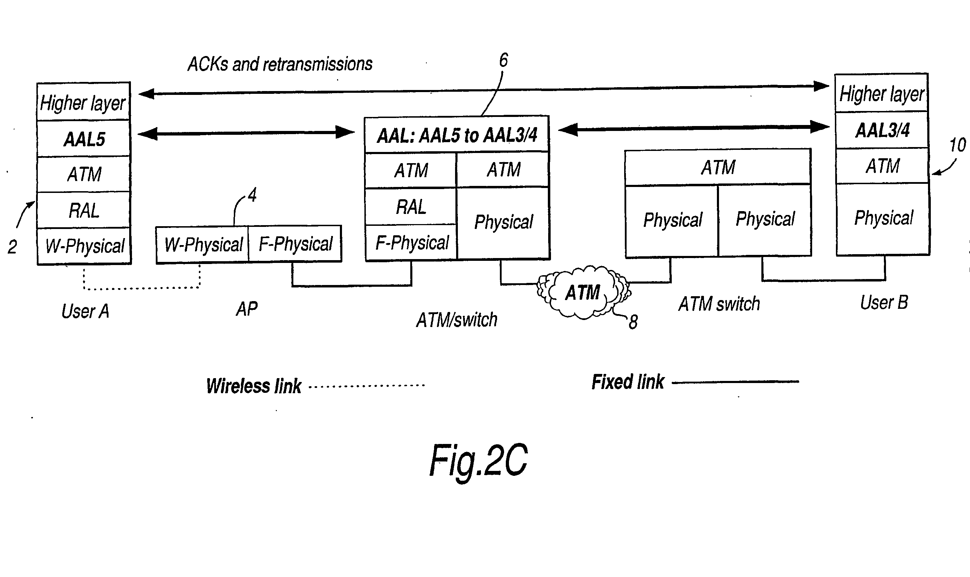

With reference to Figure 2A, an implementation using an AAL 5 protocol from end to end is shown.

The AAL 5 protocol does not support simultaneous multiplexing of packets on a single virtual circuit (VC). Thus since all cells associated with a particular PDU can therefore be assumed to relate to one VC, the so-called ATM layer user to user (AUU) parameter is redundant. The terminal 2 may therefore use the AUU parameter to delineate the boundary between PDUs. This is achieved by setting the AUU parameter in the ATM cell header of the last cell of the PDU which is being transmitted.

Thus at the receiver 10, the end of a particular PDU is detected by checking the AUU parameter in each ATM cell header and looking for a cell in which the AUU parameter is set. Since the receiver 10 expects to see a cell with the AUU parameter set, it is necessary for the switch 6 and the transmitter 2 to cooperate to ensure that the last cell of a particular PDU is transmitted to the receiver 10 even if the rest of the PDU has not been transmitted because it contained an erroneous cell. Thus, preferably the signal returned by the switch 6 to the terminal 2 when an erroneous ATM cell is detected, causes the terminal 2 to cease sending the remaining cells of the PDU except for the last cell. The last cell is transmitted by the terminal and passed onwards by the switch 6 and the network 8.

The header of each cell may be protected using error coding. The error coding may allow errors to be corrected as well as detected. This provides improved efficiency particularly when the first "PPD-aware" switch in the path from the terminal 2 to the terminal 10 is in the cloud 8.

With reference to Figure 2B, an implementation is shown which uses AAL3/4 from end to end. This is useful because AAL3/4 permits multiplexing of several connections with similar quality of service requirements to the same destinations in a single VC. This is useful, for example in a wide area network (WAN) environment where VPI and VCI values are at a premium. However, such values are unlikely to be at a premium in the wireless link between the terminal 2 and the switch 6. Thus, in that link, such multiplexing is not permitted. The terminal 2 creates all the ATM cells from a single PDU so that multiplexing occurs at a PDU level rather than at a cell level. The AUU parameter is used in the same way as described in connection with Figure 2A to differentiate between cells of different PDUs.

In the switch 6, however, the AUU parameter is reset in the last cell of the PDU before onward transmission to the receiving terminal 10. This is because the receiving terminal 10 can determine which PDU is associated with which cell using the ALL3/4 protocol, i.e. internal multiplexing (at an ATM cell level) is permitted on the link after the ATM switch 6.

Additionally, since the terminal 10 can determine from the ALL3/4 protocol which ATM cells are associated with which PDUs, it is not necessary to transmit the last cell of a PDU containing an erroneous ATM cell. Thus, the signal sent by the ATM switch 6 to the terminal 2 when an erroneous ATM cell is detected simply causes the terminal 2 to cease sending any further cells from that PDU and to proceed to cells from the next PDU.

With reference to Figure 2C, a hybrid solution may be desirable. The AAL5 protocol is more robust for the wireless link than the AAL3/4 protocol since it includes better error detection capabilities. Also as discussed above, assuming that there are enough VPI/VCI values, ATM multiplexing can be performed at the medium access control (MAC) level using the same channel for two or more ATM connections thus allowing a form of multiplexing on the wireless link between the terminal 2 and the switch 6. However, as discussed above, the AAL3/4 protocol allows multiplexing of several connections using the same VC and this may be desirable in the network 8.

To implement the hybrid solution, the ATM switch 6 implements all levels of the ATM protocol stack up to and including the ATM adaptation layer. In this layer, the ATM switch 6 is operable to perform a conversion from the AAL5 protocol to the ALL3/4 protocol for onward transmission of ATM cells to the terminal 10. During this conversion, the AUU parameter (which is set by the terminal 2 to indicate the end of a PDU) is reset before onward transmission to the terminal 10 (which as discussed above does not need the AUU parameter to be set to indicate boundaries of different PDUs since this is incorporated in the AAL3/4 protocol).

Preferably, the wireless connection between the terminal 2 and ATM switch 6 incorporates increased error detection and/or correction capabilities above that used for a fixed link. This is because the wireless link has an increased bit error rate (BER) compared to a wired link. Preferably sufficient coding is included to allow errors to at least be detected in the header and more preferably, for such errors to be corrected.

## Claims

1. A method of transmitting non-real-time data over a wireless link from a terminal (2) to an ATM switch (6) comprising the steps of:
generating in the terminal (2), a plurality of ATM cells derived from a protocol data unit (PDU),
sequentially transmitting the ATM cells over the wireless link, and
determining in the ATM switch (6) for each transmitted cell, whether that cell contains an error, **characterised by**
marking the last ATM cell of the protocol data unit (PDU), and
sending an error message back to the terminal (2) if an ATM cell is determined to contain an error, the terminal (2) being arranged on receipt of the error message, to cease transmitting any remaining ATM cells of the protocol data unit (PDU) from which the erroneous ATM cell was derived.

2. A method according to claim 1, wherein the last ATM cell of a protocol data unit (PDU) is marked in the terminal (2), using the ATM layer user-to-user parameter (AUU) in the header of the said last ATM cell.

3. A method according to claim 1 or claim 2, wherein the ATM cells are generated in the terminal (2) by mapping from the protocol data unit (PDU) to ATM cells using an AAL5 ATM adaptation protocol.

4. A method according to claim 3, wherein the ATM switch (6) translates the AAL5 protocol data unit received as a plurality of ATM cells, into an AAL3/4 protocol data unit comprising a plurality of ATM cells mapped using an AAL3/4 ATM adaptation protocol for onward transmission to another ATM switch or receiver (8,10).

5. A method according to claim 4, wherein the translation step includes resetting the ATM user-to-user parameter (AUU) in the header of the last ATM cell of the AAL5 protocol data unit.

6. A method according to any preceding claim, wherein after receipt of the error message, the terminal (2) transmits the last ATM cell of the protocol data unit (PDU) from which the erroneous ATM cell was derived.

7. A method according to claim 1 or claim 2, wherein the ATM cells are generated in the terminal (2) by mapping from the protocol data unit to ATM cells using an AAL3/4 ATM adaptation protocol.

8. A method according to claim 7, wherein the ATM cells generated in the terminal (2) from the protocol data unit are all associated with the same virtual circuit.

9. A method according to claim 7 or claim 8, wherein the switch (6) resets the ATM user-to-user parameter (AUU) in the header of the last ATM cell of the protocol data unit before onward transmission to another ATM switch or receiver (8,10).

10. An ATM protocol stack for wireless ATM communications comprising an ATM layer (ATM) and a physical layer, below the ATM layer (ATM), adapted to include a radio access layer (RAL), wherein the ATM layer is arranged to generate a plurality of ATM cells from a protocol data unit (PDU), and
the radio access layer (RAL) includes a medium access control protocol layer for sequentially transmitting said ATM cells over a wireless link and a partial packet discard (PPD) mechanism **characterised in that** the ATM layer is arranged to mark the last cell of the protocol data unit (PDU) and said partial packet discard (PPD) mechanism causes the sequential transmission of any remaining ATM cells of the protocol data unit (PDU) to cease in response to receipt of an error message that a transmitted ATM cell derived from said protocol data unit (PDU) contains an error.

11. A data terminal (2) for use with the ATM protocol stack of claim 10.

12. A data terminal (2) according to claim 11, including a wireless physical layer (W-Physical).

13. An ATM switch (6) for use with the ATM protocol stack in claim 10.

14. An ATM switch (6) according to claim 13, including an ATM layer (ATM) and an ATM adaptation layer (AAL), the ATM adaptation layer being arranged to convert ATM cells mapped from a protocol data unit using the AAL5 protocol to ATM cells representing the same protocol data unit using an AAL3/4 mapping.

## Patentansprüche

1. Verfahren zum Übertragen von Nicht-Echtzeitdaten von einer Endeinrichtung (2) über eine Drahtlosverbindung zu einem ATM-Switch (6), das die folgenden Schritte umfasst:
Erzeugen einer Vielzahl von ATM-Zellen, die von einer Protokoll-Dateneinheit (PDU) bezogen werden, in der Endeinrichtung (2),
sequenzielles Senden der ATM-Zellen über die Drahtlosverbindung, und
Feststellen für jede gesendete Zelle, ob die Zelle einen Fehler enthält, in dem ATM-Switch (6), **gekennzeichnet durch**:
Kennzeichnen der letzten ATM-Zelle der Protokoll-Dateneinheit (PDU), und
Rücksenden einer Fehlermeldung zu der Endeinrichtung (2), wenn festgestellt wird, dass eine ATM-Zelle einen Fehler enthält, wobei die Endeinrichtung (2) so eingerichtet ist, dass sie beim Empfang der Fehlermeldung Senden etwaiger verbleibender ATM-Zellen der Protokoll-Dateneinheit (PDU) beendet, von der die fehlerhafte ATM-Zelle bezogen wurde.

2. Verfahren nach Anspruch 1, wobei die letzte ATM-Zelle einer Protokoll-Dateneinheit (PDU) in der Endeinrichtung (2) unter Verwendung des Teilnehmer-zu-Teilnehmer-Parameters (AUU) der ATM-Schicht im Header der letzten ATM-Zelle markiert wird.

3. Verfahren nach Anspruch 1 oder Anspruch 2, wobei die ATM-Zellen in der Endeinrichtung (2) erzeugt werden, indem unter Verwendung eines AAL5-ATM-Anpassungsprotokolls von der Protokoll-Dateneinheit (PDU) auf ATM-Zellen abgebildet wird.

4. Verfahren nach Anspruch 3, wobei der ATM-Switch (6) die AAL5-Protokoll-Dateneinheit, die als eine Vielzahl von ATM-Zellen empfangen wird, in eine AAL3/4-Protokoll-Dateneinheit umsetzt, die eine Vielzahl von ATM-Zellen umfasst, die unter Verwendung eines AAL3/4-ATM-Anpassungsprotokolls zum Weitersenden zu einem anderen ATM-Switch oder -Empfänger (8, 10) abgebildet werden.

5. Verfahren nach Anspruch 4, wobei der Umsetzschritt das Zurücksetzen des ATM-Teilnehmer-zu-Teilnehmer-Parameters (AUU) in dem Header der letzten ATM-Zelle der AAL5-Protokoll-Dateneinheit einschließt.

6. Verfahren nach einem der vorangehenden Ansprüche, wobei nach Empfang der Fehlermeldung die Endeinrichtung (2) die letzte ATM-Zelle der Protokoll-Dateneinheit (PDU) sendet, von der die fehlerhafte ATM-Zelle bezogen wurde.

7. Verfahren nach Anspruch 1 oder Anspruch 2, wobei die ATM-Zellen in der Endeinrichtung (2) erzeugt werden, indem unter Verwendung eines AAL3/4-ATM-Anpassungs-Protokolls von der Protokoll-Dateneinheit auf ATM-Zellen abgebildet wird.

8. Verfahren nach Anspruch 7, wobei die in der Endeinrichtung (2) aus der Protokoll-Dateneinheit erzeugten ATM-Zellen alle mit der gleichen virtuellen Verbindung zusammenhängen.

9. Verfahren nach Anspruch 7 oder Anspruch 8, wobei der Switch (6) den ATM-Teilnehmer-zu-Teilnehmer-Parameter (AUU) in dem Header der letzten ATM-Zelle der Protokoll-Dateneinheit vor dem Weitersenden zu einem anderen ATM-Switch oder -Empfänger (8, 10) zurücksetzt.

10. ATM-Protokollstapel für drahtlose ATM-Verbindungen, die eine ATM-Schicht (ATM) und eine physikalische Schicht unter der ATM-Schicht (ATM) umfasst, die eine Funkzugangsschicht (radio access layer - RAL) enthält, wobei die ATM-Schicht so eingerichtet ist, dass sie eine Vielzahl von ATM-Zellen aus einer Protokoll-Dateneinheit (PDU) erzeugt, und
die Funkzugangsschicht (RAL) eine MAC-Protokollschicht zum sequenziellen Senden der ATM-Zellen über eine Drahtlosverbindung und einen Partial-Packet-Discard (PPD)-Mechanismus enthält, **dadurch gekennzeichnet, dass** die ATM-Schicht so eingerichtet ist, dass sie die letzte Zelle der Protokoll-Dateneinheit (PDU) markiert, und der Partial-Packet-Discard (PPD)-Mechanismus bewirkt, dass das sequenzielle Senden etwaiger verbleibender ATM-Zellen der Protokoll-Dateneinheit (PDU) in Reaktion auf Empfang einer Fehlermeldung dahingehend, dass eine gesendete ATM-Zelle, die von der Protokoll-Dateneinheit (PDU) bezogen wurde, einen Fehler enthält, beendet wird.

11. Datenendeinrichtung (2) zum Einsatz mit dem ATM-Protokollstapel nach Anspruch 10.

12. Datenendeinrichtung (2) nach Anspruch 11, die eine physikalische Drahtlos-Schicht (W-Physical) enthält.

13. ATM-Switch (6) zum Einsatz mit dem ATM-Protokollstapel nach Anspruch 10.

14. ATM-Switch (6) nach Anspruch 13, der eine ATM-Schicht (ATM) und eine ATM-Anpassungsschicht (AAL) enthält, wobei die ATM-Anpassungsschicht so eingerichtet ist, dass sie ATM-Zellen, die von einer Protokoll-Dateneinheit unter Verwendung des AAL5-Protokolls abgebildet wurden, in ATM-Zellen umwandelt, die die gleiche Protokoll-Dateneinheit unter Verwendung einer AAI3/4-Abbildung darstellen.

## Revendications

1. Procédé de transmission de données non en temps réel par l'intermédiaire d'une liaison sans fil depuis un terminal (2) à un commutateur ATM (6), comprenant les étapes consistant à :
générer, dans le terminal (2), une pluralité de cellules ATM dérivées d'une unité de données de protocole (PDU),
transmettre séquentiellement les cellules ATM par l'intermédiaire de la liaison sans fil, et
déterminer dans le commutateur ATM (6), pour chaque cellule transmise, si cette cellule contient une erreur,
**caractérisé par**
le marquage de la dernière cellule ATM de l'unité de données de protocole (PDU), et
l'émission d'un message d'erreur en retour au terminal (2) si une cellule ATM est déterminée comme contenant une erreur, le terminal (2) étant agencé de telle sorte que, lors de la réception du message d'erreur, il cesse de transmettre d'autres cellules ATM quelconques de l'unité de données de protocole (PDU), à partir de laquelle la cellule ATM erronée a été dérivée.

2. Procédé selon la revendication 1, selon lequel la dernière cellule ATM d'une unité de données de protocole (PDU) est marquée dans le terminal (2), moyennant l'utilisation du paramètre utilisateur-à-utilisateur (AUU) de la couche ATM dans l'en-tête de ladite dernière cellule ATM.

3. Procédé selon la revendication 1 ou la revendication 2, dans lequel les cellules ATM sont générées dans le terminal (2) par mappage depuis l'unité de données de protocole (PDU) sur des cellules ATM moyennant l'utilisation d'un protocole d'adaptation ATM AAL5.

4. Procédé selon la revendication 3, selon lequel le commutateur ATM (6) convertit l'unité de données de protocole AAL5 reçue sous la forme d'une pluralité de cellules ATM, en l'unité de données de protocole AAL3/4 comprenant une pluralité de cellules ATM mappées moyennant l'utilisation d'un protocole d'adaptation ATM AAL3/4 pour la transmission directe vers un autre commutateur ATM ou un autre récepteur (8,10).

5. Procédé selon la revendication 4, dans lequel l'étape de conversion inclut la remise à l'état initial du paramètre d'utilisateur-à-utilisateur (AUU) dans l'en-tête de la dernière cellule ATM de l'unité de données de protocole AAL5.

6. Procédé selon l'une quelconque des revendications précédentes, selon lequel après réception du message d'erreur, le terminal (2) transmet la dernière cellule ATM de l'unité de données de protocole (PDU), d'où la cellule ATM erronée était dérivée.

7. Procédé selon la revendication 1 ou la revendication 2, selon lequel les cellules ATM sont générées dans le terminal (2) par mappage à partir de l'unité de données de protocole sur des cellules ATM en utilisant un protocole d'adaptation ATM AAL3/4.

8. Procédé selon la revendication 7, selon lequel les cellules ATM générées dans le terminal (2) à partir de l'unité de données de protocole sont toutes associées au même circuit virtuel.

9. Procédé selon la revendication 7 ou la revendication 8, dans lequel le commutateur (6) ramène à l'état initial le paramètre utilisateur-à-utilisateur ATM (AUU) dans l'en-tête de la dernière cellule ATM de l'unité de données de protocole avant la transmission en direct vers un autre commutateur ATM au récepteur (8,10).

10. Pile de protocoles ATM pour des communications ATM sans fil comprenant une couche ATM (ATM) et une couche physique, au-dessous de la couche ATM (ATM), adaptée pour inclure une couche d'accès radio (RAL), et dans laquelle la couche ATM est agencée de manière à générer une pluralité de cellules ATM à partir d'une unité de données de protocole (PDU), et
la couche d'accès radio (RAL) inclut une couche médiane de protocole de commande d'accès pour transmettre séquentiellement lesdites cellules ATM par l'intermédiaire d'une liaison sans fil et un mécanisme de rejet partiel de paquets (PPD),
**caractérisée en ce que** la couche ATM est agencée de manière à marquer la dernière cellule de l'unité de données de protocole (PDU), et ledit mécanisme de rejet partiel de paquet (PPD) provoque la cessation de la transmission séquentielle de toutes les autres cellules ATM de l'unité de données de protocole (PDU), en réponse à la réception d'un message d'erreur indiquant qu'une cellule ATM transmise, dérivée de ladite unité de données de protocole (PDU) contient une erreur.

11. Terminal de données (2) destiné à être utilisé avec la pile de protocoles ATM de la revendication 10.

12. Terminal de données (2) selon la revendication 11, incluant une couche physique sans fil (W-physique).

13. Commutateur ATM (6) destiné à être utilisé avec la pile de protocoles ATM selon la revendication 10.

14. Commutateur ATM (6) selon la revendication 13, incluant une couche ATM (ATM) et une couche d'adaptation ATM (AAL), la couche d'adaptation ATM étant agencée de manière à convertir des cellules ATM mappées à partir d'une unité de données de protocole en utilisant le protocole AAL5 sur des cellules ATM représentant la même unité de données de protocole en utilisant un mappage AAL3/4.
